# EUROPÄISCHE PATENTSCHRIFT

(11) **EP 3 936 213 B1**
(45) Veröffentlichungstag und Bekanntmachung des Hinweises auf die Patenterteilung: **15.03.2023**
(21) Anmeldenummer: 21179425.0
(22) Anmeldetag: 15.06.2021
(51) Int. Cl.: B01D 46/00, B01D 46/12, B01D 46/52

(54) **UMGEBUNGSLUFTREINIGUNGSVORRICHTUNG UND VERWENDUNG EINES FILTERELEMENTS IN EINER UMGEBUNGSLUFTREINIGUNGSVORRICHTUNG**
AMBIENT AIR PURIFICATION DEVICE AND USE OF A FILTER ELEMENT IN AN AMBIENT AIR PURIFICATION DEVICE
DISPOSITIF DE PURIFICATION D'AIR AMBIANT ET UTILISATION D'UN ÉLÉMENT FILTRANT DANS UN DISPOSITIF DE PURIFICATION D'AIR AMBIANT

(30) Priorität: 10.07.2020 DE 102020118293
(43) Veröffentlichungstag der Anmeldung: 12.01.2022
(73) Patentinhaber: MANN+HUMMEL LIFE SCIENCES & ENVIRONMENT HOLDING SINGAPORE PTE. LTD., Singapore 139234 (SG)
(72) Erfinder: GUSEK, Jens, 74392 Freudental (DE); HITTINGER, Marc, 72768 Reutlingen (DE); SCHULZ, Christoph, 70569 Stuttgart (DE); BAUCH, Maximilian, 74357 Bönnigheim (DE)
(74) Vertreter: Mann + Hummel Intellectual Property

(56) Entgegenhaltungen:
- EP-A1- 1 189 675
- WO-A2-2008/045325
- DE-B3-102018 129 286
- JP-A- H1 133 331
- US-A1- 2004 144 254

## Beschreibung

### Technisches Gebiet

Die Erfindung betrifft eine Umgebungsluftreinigungsvorrichtung, insbesondere zur stationären Umgebungsluftfiltration im Außen- und/oder Innenraum, sowie eine Verwendung eines Filterelements in einer Umgebungsluftreinigungsvorrichtung.

### Stand der Technik

Weltweit besteht in vielen Ballungszentren das Problem, dass die Umgebungsluft durch Industrieabgase, den Straßenverkehr und private Feuerstätten vor allem bei widrigen Wetterlagen (kein Regen, Inversion, geringe Windgeschwindigkeiten, kein Luftaustausch zwischen Höhenschichten) Grenzwerte für Feinstaub und/oder Gase wie Ozon, NOx, CO um ein Vielfaches überschreiten kann. Maßnahmen, die zu einer Reduktion der Schadstoffkonzentrationen führen, können entweder in der Vermeidung oder Reduzierung von Emissionen und/oder der Abscheidung dieser Schadstoffe aus der Umgebungsluft liegen.

Die gleiche Problematik stellt sich auch in Innenräumen, in denen durch Immisionsquellen im Innenraum selbst, Personen sowie Schadstoffeinträge von außen ein Bedarf besteht, die Luft aufzureinigen.

Es ist ein bereits im Stand der Technik dokumentierter Ansatz, stationär montierte Umgebungsluftreiniger zur Abscheidung von Luftschadstoffen einzusetzen. Solche Geräte verfügen in der Regel über ein durchströmbares Gehäuse mit einem Einlass und einem Auslass, in dem jeweils ein oder mehrere Gebläse und ein Filter angeordnet sind, wobei es sich bei den Filtern um klassische Filterelemente aus porösen und für Luft durchlässigen Filtermedien und/oder um Elektroabscheider handeln kann. Die Umgebungsluftreiniger werden vorteilhaft an Orten mit erhöhter Schadstoffkonzentration aufgestellt, etwa im Außenbereich als auch in Innenräumen, Tunneln, unterirdischen Bahnhöfen, Bushaltestellen etc.

Gattungsgemäße Umgebungsluftreiniger sind beispielsweise aus FR 27 87 175 A oder US 2019 160 411 A bekannt.

Unterschiedliche Arten der Montage von V-Zellenfiltern sind bekannt. EP 1189675 A1 offenbart eine Trägerkonstruktion für einen V-Zellenfilter, die mittels eines Arms in eine Betriebsposition gehoben werden kann. WO 2008045325 A2 offenbart ein seitliches Einschieben eines V-Zellenfilters in ein Gehäuse. US 2004/144254 A1 offenbart ein schubladenartiges Einschieben in ein Gehäuse.

Um möglichst viel Filterfläche und damit eine große Abscheidekapazität sowie einen geringen Druckverlust realisieren zu können, kommen in derartigen Umgebungsluftreinigern in der Praxis häufig fluidisch parallel geschaltete und in einer V-Konfiguration zu einander angeordnete Flachfilterbälge zum Einsatz. Diese auch als V-Zellenfilter bezeichneten Filter weisen 4 bis 10 Einzelbälge auf und können ein erhebliches Gewicht von über 20 kg haben. Dies ist unter anderem aus DE 10 2018 129 286 B3 bekannt.

Die o.g. Umgebungsluftreinigungsvorrichtungen nach dem Stand der Technik weisen den Nachteil auf, dass ein Service (Austausch der Filterelemente) nur unter erhöhtem Aufwand möglich ist. Entweder ist der Servicevorgang aus ergonomischen Gesichtspunkten unzureichend (zu hohes Gewicht der Filter) oder aber die Zugänglichkeit der Filterelemente im Innenraum ist beschränkt (erhöhte Servicedauer).

Ausgehend von diesem Stand der Technik liegt der Erfindung daher die Aufgabe zugrunde, eine Umgebungsluftreinigungsvorrichtung zu schaffen, die unter einem Serviceaspekt optimiert ist.

Diese Aufgabe wird durch eine Umgebungsluftreinigungsvorrichtung mit den Merkmalen des unabhängigen Patentanspruchs 1 gelöst.

Ferner besteht die Aufgabe, eine Verwendung eines Filterelements in einer Umgebungsluftreinigungsvorrichtung bereit zu stellen, die eine Fehlmontage des Filterelements ausschließt.

Diese Aufgabe wird durch eine Verwendung gemäß Patentanspruch 16 gelöst.

Bevorzugte Weiterbildungen werden durch die jeweiligen abhängigen Ansprüche angegeben.

### Offenbarung der Erfindung

Die erfindungsgemäße Umgebungsluftreinigungsvorrichtung ist insbesondere zur stationären Umgebungsluftfiltration im Innen- und/oder Außenraum ausgebildet. Sie kann als sog. Außenluftreiniger oder als Innenluftreiniger ausgebildet sein. Bei einer Ausführung als Außenluftreiniger kann diese dazu vorgesehen sein, im öffentlichen Außenraum, etwa an innerstädtischen Schadstoff-Hotspots, beispielsweise in unmittelbarer Nähe eines Fahrwegs und/oder in einem Tunnel, aufgestellt zu werden. Im Innenraum kann die Umgebungsluftreinigungsvorrichtung überall dort eingesetzt werden, wo Bedarf an sauberer Raumluft besteht, so etwa in Büros, Werkshallen, medizinischen Einrichtungen und/oder in Privaträumen.

Die Umgebungsluftreinigungsvorrichtung hat ein Gebläsegehäuse, das zumindest einen Lufteinlass und zumindest einen Luftauslass aufweist, In dem Gebläsegehäuse ist zumindest eine Luftstromerzeugungsvorrichtung angeordnet, mittels der ein Luftstrom von dem Lufteinlass zu dem Luftauslass erzeugbar ist, wobei in dem Gebläsegehäuse ferner strömungsmäßig zwischen dem Lufteinlass und dem Luftauslass eine Filtervorrichtung vorliegt, die eine Mehrzahl an V-förmig zueinander angeordneten Filterelementen umfasst. Das Gebläsegehäuse weist zumindest eine Servicetür auf, durch die ein Innenraum des Gebläsegehäuses zugänglich ist. Die Filtervorrichtung umfasst einen an dem Gebläsegehäuse gehaltenen Filterelementträger, der die V-förmig zueinander angeordneten Filterelemente trägt. Der Filterelementträger ist von einem Betriebszustand, in welchem dieser vollständig innerhalb des Gebläsegehäuses vorliegt, in einen Servicezustand überführbar, in welchem der Filterelementträger zumindest teilweise durch die Servicetür aus dem Gebläsegehäuse herausragt. In Ausführungsformen kann die Umgebungsluftreinigungsvorrichtung auch zwei oder mehr Luftstromerzeugungsvorrichtungen aufweisen, von denen zumindest zwei in voneinander getrennten Luftpfaden angeordnet sind.

Die erfindungsgemäße Bauform der Umgebungsluftreinigungsvorrichtung bietet gegenüber bekannten Filtervorrichtungen den Vorteil, dass ein Servicevorgang (Austausch der mit Schmutz beladenen Filterelemente) deutlich schneller und vom Arbeitsablauf her ergonomischer erfolgen kann. Indem der Filterelementträger im Servicezustand zumindest teilweise aus der Servicetür heraus geschwenkt vorliegt, kann ein Austausch der Filterelemente durch den Servicetechniker/in problemlos und einfach erfolgen.

In Ausführungsformen kann das Gebläsegehäuse beispielsweise eine quaderförmige, insbesondere würfelförmige, Gestalt aufweisen. Es kann aber auch eine hiervon abweichende Gestalt haben, etwa mit einer kreis- oder ellipsenförmigen Grundfläche.

In weiteren Ausführungen kann das Gebläsegehäuse zumindest ein Gitter aufweisen, das den Lufteinlass und/oder den Luftauslass zumindest teilweise überspannt. Das Gitter stellt einen Eingriffschutz bereit und hält Grobschmutz ab, der ansonsten die Vorrichtung zur Erzeugung des Luftstroms beschädigen könnte

Bei der Vorrichtung zur Erzeugung des Luftstroms kann es sich um ein Axial-, Diagonal- oder Radialgebläse handeln, das von einem Elektromotor angetrieben werden kann. Andere dem Fachmann geeignet erscheinende Antriebsarten sind möglich.

Zum Betrieb des Elektromotors kann die Filtervorrichtung bevorzugt einen elektrischen Anschluss umfassen. Bevorzugt kann der elektrische Anschluss auf Niederspannungsebene erfolgen. Die Filtervorrichtung kann jedoch auch Einrichtungen aufweisen, die einen Anschluss auf Mittelspannungsebene, etwa an Bahnstromnetze, ermöglichen.

Ferner kann die Umgebungsluftreinigungsvorrichtung eine Steuerungsvorrichtung aufweisen, insbesondere eine elektronische Steuerungsvorrichtung, mit der Betriebszeiten und -strategien gesteuert werden können. Die Steuerungsvorrichtung ist in einer dem Fachmann geeignet erscheinenden Weise mit dem Elektromotor zu koppeln.

Der Filterelementträger ist gegenüber dem Gebläsegehäuse um zumindest eine Achse verschwenkbar gelagert. Zusätzlich kann der Filterelementträger um zumindest eine Achse linear verschiebbar gelagert sein. Es sind hierbei auch Kombinationenmöglich; so kann die Überführung des Filterelementträgers in seinen Servicezustand beispielsweise auch eine lineare Bewegung um mehr als eine Achse einschließen und/oder einen Schwenkvorgang um mehr als eine Achse.

In einer weiter bevorzugten Ausführungsform kann eine Schwenkachse des Filterelementträgers gegenüber dem Gebläsegehäuse in einer vorbestimmten Betriebsorientierung der Umgebungsluftreinigungsvorrichtung in vertikaler und/oder horizontaler Richtung verlaufen. Es sind jedoch auch andere Anordnungen der Schwenkachse im Raum möglich, so etwa als beliebige Raumdiagonale.

Ferner kann der Filterelementträger vermittels zumindest eines Gelenks mit zumindest einem Drehfreiheitsgrad mit dem Gebläsegehäuse gekoppelt sein. Es können hier alle dem Fachmann geeignet erscheinende Gelenktypen eingesetzt werden, die in der Lage sind, die (statischen) Lasten, insbesondere im Servicezustand, aufzunehmen. Das Gelenk kann eine Gleit- und/oder Wälzlagerung umfassen.

Gemäß einer besonders bevorzugten Ausführungsform kann die Umgebungsluftreinigungsvorrichtung eine Arretierungsvorrichtung aufweisen, vermittels der der Filterelementträger in seinem Betriebszustand und/oder seinem Servicezustand gegenüber dem Gebläsegehäuse arretierbar ist. Während eine Arretierung im Betriebszustand einem sicheren Betrieb der Vorrichtung dient und beispielsweise Klappergeräusche im Betrieb verhindert sowie eine zuverlässige Abdichtung einer Roh- von einer Reinseite sicherstellt, ermöglicht eine Arretierung im Servicezustand vorteilhafter Weise einen weiter vereinfachten Servicevorgang: Da der Filterelementträger gegenüber dem Gebläsegehäuse arretiert ist, stehen dem Servicetechniker/in beide Hände für die Montagearbeiten zur Verfügung.

In einer besonderen Ausführung liegt ein erster Teil der Arretierungsvorrichtung an dem Filterelementträger vor und ein zweiter Teil der Arretierungsvorrichtung an dem Gebläsegehäuse.

Ferner kann die Arretierungsvorrichtung zumindest ein federbelastetes Sperrelement umfassen. Das federbelastetes Sperrelement kann beispielsweise als Sperrbolzen ausgebildet sein und an dem Filterelementträger in einer axial verschiebbaren Weise gehalten werden. Der Sperrbolzen als "erster Teil" der Arretierungsvorrichtung kann in seinem Sperrzustand in eine korrespondierende Vertiefung bzw. Bohrung des Gebläsegehäuses eingreifen und zur Freigabe des Sperrzustands axial zurückgezogen werden, so dass der Eingriff in der gebläsegehäuseseitigen Vertiefung bzw. Bohrung gelöst wird. Alternativ kann das Sperrelement als drehbar gelagertes Sperrelement ausgeführt sein, das operativ mit einem Schlitz als Sperrgegenelement zusammenwirkt. Das drehbar gelagerte Sperrelement kann hierbei an dem Filterelementträger angeordnet sein und das Sperrgegenelement am Gebläsegehäuse oder umgekehrt.

Alternativ oder zusätzlich kann eine Längserstreckung der Mehrzahl an V-förmig zueinander angeordneten Filterelementen in der vorbestimmten Betriebsorientierung der Umgebungsluftreinigungsvorrichtung in vertikaler Richtung verlaufen. In diesem Fall spricht man auch von einer stehenden Anordnung der Filterelemente. In anderen Ausführungsformen ist auch eine hiervon abweichende Anordnung der Filterelemente möglich, so etwa eine Orientierung der Längserstreckungen der Filterelemente in horizontaler Richtung.

Unter einer Längserstreckung wird eine Erstreckungsrichtung des Filterelements verstanden, die mit der Raumrichtung zusammenfällt, in der es seine größte Abmessung hat.

In einer ganz besonders bevorzugten Ausführungsform kann vorgesehen sein, dass der Filterelementträger eine Mehrzahl Filterelementeinschübe umfasst, in denen jeweils ein Filterelement entlang einer Einschub-/Entnahmerichtung entnehmbar aufgenommen ist. Dies ermöglicht den einzelnen Austausch von Filterelementen, was vorteilhaft zum Austausch bei partiellen Beschädigungen ist sowie den Servicevorgang noch ergonomischer gestaltet, da die zu bewegende Masse eines einzelnen Filterelements deutlich geringer ist.

Darüber hinaus kann vorgesehen sein, dass der Filterelementträger zumindest eine Filterelementhaltevorrichtung aufweist, welche zumindest eines der Filterelemente in eingeschobenem Zustand bezüglich des Filterelementträgers mechanisch fixiert. Die Filterelementhaltevorrichtung kann ihrerseits in einen Servicezustand überführt werden, in dem sie gegenüber einem Filterelementträgerkörper verlagert vorliegt und als Auszugshilfe für das Filterelement dient.

Die Filterelementhaltevorrichtung kann beispielsweise als Klemmschiene ausgebildet sein, die einenends schwenkbar an dem Filterelementträgerkörper gehalten ist und in ihrem Haltezustand anderenends lösbar an dem Filterelementträgerkörper befestigt ist. Bevorzugt ist die schwenkbare Befestigung der Klemmschiene an einer bezüglich der Schwererichtung obenliegenden Position vorgesehen und die lösbare Befestigung am Filterelementträgerkörper an einer bezüglich der Schwererichtung unteren Position.

Um die Filterelementhaltevorrichtung in ihren Servicezustand zu überführen, wird die lösbare Befestigung gelöst, so dass die Klemmschiene relativ zum Filterelementträgerkörper verschwenkt werden kann. In ihrem Servicezustand kann die Klemmschiene weiter vorteilhaft in einer Schwenkposition arretiert werden, die eine Nutzung als Auszugsebene für das Filterelement ermöglicht. Dies vereinfacht den Servicevorgang noch weiter, da das Filterelement durch die als Auszugsebene wirkende Klemmschiene gegenüber der Schwererichtung abgestützt wird.

Ferner kann vorgesehen sein, dass zumindest eines der Filterelemente einen Faltenbalg aus einem gefalteten Filtermedium umfasst.

Alternativ oder zusätzlich kann das Filterelement ein Hauptfilterelement und ein in Strömungsrichtung vorgelagertes Vorfilterelement, insbesondere eine Vliesmatte, umfassen, wobei das Hauptfilterelement insbesondere als mit zumindest einem Faltenbalg aus Filtermedium ausgebildet ist. Alternativ oder zusätzlich kann es sich bei dem Filterelement um ein Filterelement handeln, das zumindest der Partikelfilterklasse ePM10 75% nach ISO 16890 entspricht. Bei dem Filterelement kann es sich insbesondere um ein Flachfilterelement handeln, dessen Mindestbreite und/oder Mindestlänge 100mm, bevorzugt 200 mm, stärker bevorzugt zumindest 300 mm, beträgt. Eine Faltenhöhe des Faltenbalgs kann zumindest 15 mm, bevorzugt zumindest 25 mm, stärker bevorzugt zumindest 35 mm, betragen.

In einer ebenfalls besonders bevorzugten Ausführungsform kann vorgesehen sein, dass eine Faltenlängserstreckung des Faltenbalgs parallel zur Einschub-/Entnahmerichtung verläuft.

Darüber hinaus kann wenigstens eines der Filterelemente einen Rahmen aufweisen, der den Faltenbalg umlaufend umgibt, wobei der Rahmen von einem oberen oder unteren Rand her einen Einschnitt aufweist, welcher zwischen zwei benachbarten Falten vorliegt.

Der Rahmen ist hierbei bevorzugt fluiddicht mit den Stirnkanten der Falten des Faltenbalgs sowie mit Kopfkanten des Faltenbalgs verbunden. Der Rahmen kann eine an den Faltenbalg angespritzte Hartkunststoffkomponente aufweisen oder alternativ Seiten- und Kopfbänder umfassen, die bevorzugt aus einem begrenzt luftdurchlässigen Vliesmaterial gebildet sind.

Bei dem Vliesmaterial handelt es sich insbesondere um ein Spinnvlies, das bevorzugt zumindest anteilig Synthetikfasern aufweist.

Das Vliesmaterial kann ferner eine Luftdurchlässigkeit bei 200 Pa zwischen 200 und 3500 l/m²s, bevorzugt zwischen 200 und 1800 l/m²s, haben. Alternativ oder zusätzlich kann das Vliesmaterial des Rahmenelements eine Dicke zwischen 0,5 und 6 mm aufweisen und/oder ein Flächengewicht zwischen 100 und 500 g/m², bevorzugt zwischen 230 und 290 g/m², aufweisen.

In einer gleichermaßen bevorzugten Ausführungsform kann der Filterelementträger im Bereich zumindest eines Filterelementeinschubs zumindest eine sich in der Einschub-/ Entnahmerichtung erstreckende Rippe aufweisen, die in den Einschnitt des Filterelements eingreift und zwischen zwei benachbarten Falten des Faltenbalgs des Filterelements aufgenommen ist. Die funktionelle Interaktion der Rippe am Filterelementträger und des Einschnitts am Filterelement erlaubt eine zusätzliche Vereinfachung der Montage, da die Rippe durch ihren Eingriff in den Einschnitt eine stützende und positionierende Funktion erfüllt. Ferner kann hierdurch ein fehlerhafte Montage des Filterelements vermieden werden (Poka-Yoke) sowie der Verbau von ungeeigneten Filterelementen (z.B. falsche Spezifikation) unterbunden werden. Es können an dem Rahmen des Filterelements auch mehrere Einschnitte vorhanden sein, in denen jeweils eine korrespondierende Rippe des Filterelementträgers aufnehmbar ist. Die Einschnitte können sowohl von einem oberen Rand als auch von einem unteren Rand her in den Rahmen eingebracht sein.

Die Rippe kann eine Länge aufweisen, welche mindestens 1/10, bevorzugt mindestens 1/6, besonders bevorzugt mindestens 1/3, der Erstreckung des Filterelements entlang seiner Faltenlängsrichtung entspricht.

Eine Weiterbildung sieht vor, dass das Gebläsegehäuse jeweils einander gegenüberliegende vorder- und rückseitige Wände, Seitenwände sowie obere und untere Wände umfasst. Der Luftauslass liegt insbesondere in einer vorder- oder rückseitigen Wand vor und der Lufteinlass in einer Seitenwand. Optional kann ein Luftstrom zwischen dem Lufteinlass und dem Luftauslass zumindest eine Richtungsänderung in seiner Hauptströmungsrichtung erfahren, insbesondere um 90°.

In einer noch weiteren Ausführungsform ist vorgesehen, dass zumindest eines der Filterelemente zumindest ein Partikelfiltermedium, bevorzugt ein HEPA-Filtermedium, aufweist. Das Partikelfiltermedium kann ein Spinnvliesmaterial umfassen, insbesondere ein Polyethylenterephthalat- oder Polypropylen-Spinnvliesmaterial, und/oder ein Nadelvliesmaterial, insbesondere ein Polypropylen- oder Polyethylenterephthalat-Nadelvlies, und/oder eine Meltblownlage und/oder ein Mehrkomponentenfasermaterial, insbesondere mit Bikomponentenfasern mit einer Polypropylen/Polyacrylnitril-Komponente. Bei Verwendung eines HEPA-Filtermediums kann die Filterfläche pro Filterelement 4-7 m² betragen, da ein HEPA-Filtermedium in der Regel deutlich dünner ist als andere Filtermedien.

Alternativ oder zusätzlich kann das Filterelement zumindest ein Adsorbens aufweisen, insbesondere eine Aktivkohle und/oder ein Zeolith. Das Adsorbens kann zur Adsorption von vorbestimmten Schadgasen, etwa NOₓ, CO, NH₃, und/oder Gerüchen dienen. Das Adsorbens kann insbesondere Teil des Filtermediums sein und als eine Schüttung in Form einer oder mehrerer Lage(n) darin vorliegen.

Alternativ oder zusätzlich kann das Filterelement eine polygonale, insbesondere quaderförmige, Form aufweisen.

Gemäß einer noch weiteren Ausführungsform kann das Filtermedium zumindest eine weitere Lage aufweisen, die als antimikrobielle und/oder antiallergene Lage ausgebildet ist, die zumindest einen antimikrobiellen und/oder antiallergenen Stoff aufweist. Durch diese Maßnahme kann die Umgebungsluftqualität unter einem weiteren wichtigen Aspekt verbessert werden.

Der antimikrobielle, insbesondere antibakterielle oder biozide, Stoff schützt das Filtermedium oder Teile bzw. Schichten desselben davor, dass dieses bzw. diese von Mikroorganismen wie z. B. Pilzen oder Pilzsporen, insbesondere Schimmelpilze oder Schimmelpilzsporen, Bakterien oder Algen, welche in lebendiger, fortpflanzungsfähiger oder ausbreitungsfähiger Form vorliegen können, befallen wird bzw. sich solche Mikroorganismen in dem Filtermedium ausbreiten oder dieses durchwachsen.

Der antiallergene Stoff kann beispielsweise feinste Pollenpartikel und sonstige Allergene, die nicht immer von dem Filtermedium vollständig zurückgehalten werden können, für den menschlichen Körper bzw. dessen Immunsystem zumindest teilweise unschädlich machen.

Als antimikrobieller Stoff kann insbesondere Zink-Pyrithion dienen. Alternativ oder zusätzlich kann Octa-isothiazolon als antimikrobieller Stoff verwendet werden. Die zweite Filterschicht kann ferner antimikrobielle Stoffe auf der Basis von Nanosilber enthalten. Die zweite Filterschicht kann auch antimikrobiellen Metallen und Metallverbindungen, insbesondere Silber, Kupfer und Aluminiumverbindungen und/oder 2-Brom-2-nitropropan-1,3-diol, weitere Isothiazolinverbindungen, Benzoesäure und deren Derivate, Benzalkoniumhalogenide, wasserlösliche Coenzyme, öllösliche Coenzyme, Pflanzenextrakte, Antibiotika, biozide Metalle, aliphatische und/oder aromatische Fettsäuren und/oder quartäre Tenside als antimikrobielle Stoffe enthalten.

Als antiallergene Stoffe kommen insbesondere Polyphenole, wie Katechine, Tannide oder Flavonoide, in Frage. Es können insbesondere Kaffee-, Gallus-, Ellagin-, Tanninsäure, Cyanidin, Procyanidin, Proanthocyanidine, Rutin, Quercitin, Resveratol verwendet werden. Polyphenole binden vorzugsweise antiallergene Stoffe, sodass die allergische Wirkung vermindert werden kann. Allergene Pollen werden beispielsweise von Polyphenolen denaturiert. Der antiallergene Stoff kann ferner antiallergene Enzyme aufweisen. Antiallergen Enzyme spalten vorzugsweise allergen wirkende Proteine in kleinere unschädlichere Bestandteile auf.

Weiter bevorzugt kann vorgesehen sein, dass die Filtervorrichtung bezüglich der Luftstromerzeugungsvorrichtung saugseitig angeordnet ist. Dies reduziert das Betriebsgeräuschniveau und ermöglicht eine weniger aufwändige Abdichtung des Gehäuses, da in einem Großteil des Gehäuses ein relativer Unterdruck gegenüber der Umgebung herrscht.

Ferner kann vorgesehen sein, dass die Filtervorrichtung zumindest vier, bevorzugt zumindest sechs, jeweils V-förmig zueinander angeordnete Filterelemente aufweist. Die die Filterfläche eines einzelnen Filterelements beträgt hierbei bevorzugte 0,5 bis 2,5 m², insbesondere 1,7 bis 2,3 m².

Diese V-förmige Filterelementkonfiguration hat sich für den Einsatz in einer stationären Umgebungsluftreinigungsvorrichtung als besonders vorteilhaft erwiesen, da eine besonders große Filterfläche bei einem geringem Anströmflächenquerschnitt untergebracht werden kann.

Die Abmessungen der Einzelfilterbälge des V-Zellenelements können dabei beispielhaft wie folgt ausgelegt sein:

| | |
|---|---|
| Länge: | 250 - 800 mm |
| Breite | 250 - 600 mm |
| Höhe: | 20 - 50 mm |
| Faltenhöhe: | 20 - 50 mm |
| Faltenabstand: | 4 - 12 mm |

Ein weiterer Aspekt der Erfindung betrifft die Verwendung eines Filterelements in einer erfindungsgemäßen Umgebungsluftreinigungsvorrichtung. Das Filterelement umfasst einen Faltenbalg aus gefaltetem Filtermedium und einen Rahmen, der den Faltenbalg umlaufend umgibt. Der Rahmen weist von einem oberen und/oder einem unteren Rand her zumindest einen Einschnitt auf, welcher zwischen zwei benachbarten Falten vorliegt.

In einer bevorzugten Weiterbildung der Verwendung verläuft eine Faltenlängserstreckung des Faltenbalgs parallel zu einer Einschub-/Entnahmerichtung der Umgebungsluftreinigungsvorrichtung für das Filterelement.

Die bezüglich der Umgebungsluftreinigungsvorrichtung offenbarten Merkmale und Merkmalskombinationen sowie deren Vorteile sind auf die erfindungsgemäße Verwendung übertragbar und umgekehrt.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, Beschreibungen und Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Fig. 1: Isometrische Darstellung der erfindungsgemäßen Umgebungsluftreinigungsvorrichtung;
- Fig. 2: Weitere isometrische Darstellung der erfindungsgemäßen Umgebungsluftreinigungsvorrichtung;
- Fig. 3-6: Isometrische Darstellungen der Wartung der erfindungsgemäßen Umgebungsluftreinigungsvorrichtung;
- Fig. 7: Isometrische Darstellungen einer weiteren Ausführungsform der erfindungsgemäßen Umgebungsluftreinigungsvorrichtung;
- Fig. 8a,b: Schematische Darstellungen eines Filterelementträgers der erfindungsgemäßen Umgebungsluftreinigungsvorrichtung;
- Fig. 9, 10: Schematische Darstellungen von Schwenkachsen des Filterelementträgers der erfindungsgemäßen Umgebungsluftreinigungsvorrichtung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

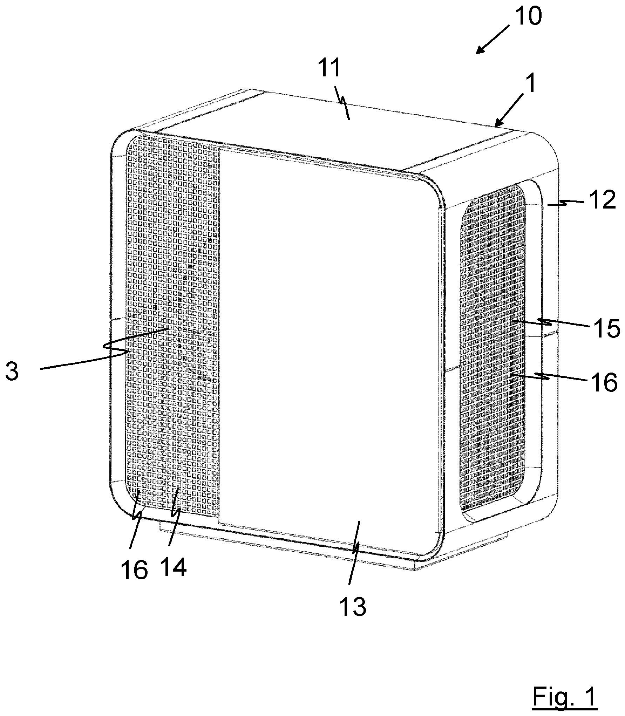

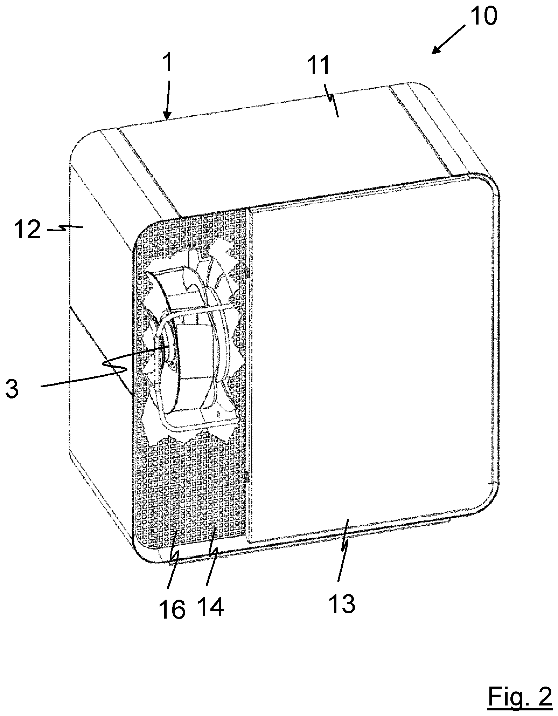

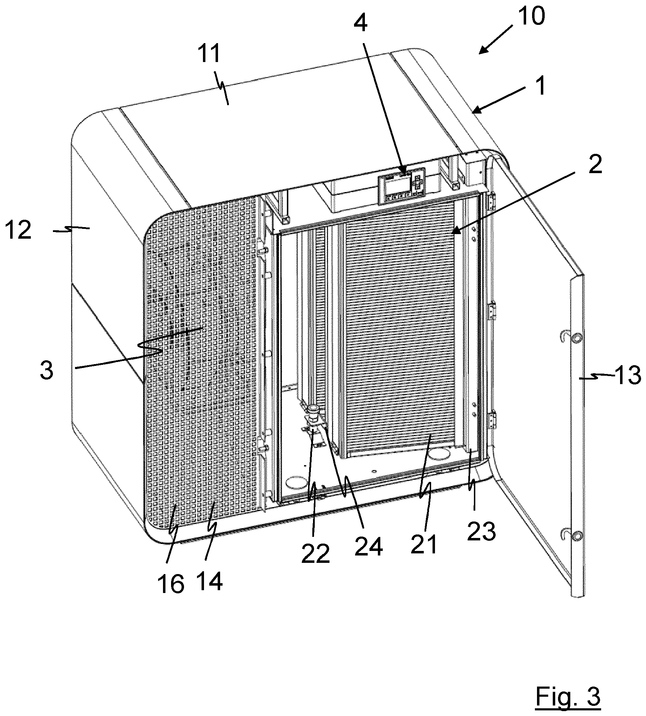

Die erfindungsgemäße und in Fig. 1 in einer isometrischen Außenansicht gezeigte Umgebungsluftreinigungsvorrichtung 10 verfügt über ein Gebläsegehäuse 1, welches einen Lufteinlass 15 sowie einen Luftauslass 14 aufweist. Der Lufteinlass 15 und der Luftauslass 14 sind jeweils von einem Gitter 16 überspannt, welches vor Eingriff in den Innenraum des Gebläsegehäuses 1 schützt und sonstige Fremdkörper fernhält. Das Gebläsegehäuse 1 hat gemäß dieser Ausführungsform eine im Wesentlichen quaderförmige Gestalt und verfügt über Seitenwände 12 sowie je eine oberen und untere Wand 11. Das Gebläsegehäuse 1 weist verrundete Kanten auf, die die Verletzungsgefahr minimieren, was insbesondere bei einer Innenraum-Aufstellung der erfindungsgemäßen Vorrichtung vorteilhaft ist. Die Kantenverrundungen sind jeweils an den kurzen Kanten der Quaderform vorgesehen. Der Lufteinlass 15 ist in einer vorderen Wand vorgesehen und der Luftauslass in einer Seitenwand 12. Strömungsmäßig zwischen dem Lufteinlass 15 und dem Luftauslass 14 ist in dem Gebläsegehäuse 1 eine Filtervorrichtung 2 sowie eine Luftstromerzeugungsvorrichtung 3 angeordnet (siehe **Fig. 2** **und** **3**), die dazu ausgebildet ist einen Luftstrom von dem Lufteinlass 15 durch die Filtervorrichtung 2 zum Luftauslass 14 zu erzeugen. Die erfindungsgemäße Umgebungsluftreinigungsvorrichtung 10 verfügt ferner über eine Servicetür 13, welche zum Service geöffnet werden kann.

Die Luftstromerzeugungsvorrichtung 3 weist ein Gebläse (Strömungsmaschine) sowie einen Elektromotor auf, der das Gebläse antreibt. Das Gebläse kann vom Fachmann in Abhängigkeit der Systemkennlinie ausgelegt werden, wobei insbesondere bekannte Bauformen wie Axial-, Diagonal und Radialgebläse in Frage kommen.

In Ausführungen verfügt die Umgebungsluftreinigungsvorrichtung 10 über eine Steuerungsvorrichtung 4. Die Steuerungsvorrichtung 4 kann insbesondere eine elektronische Steuerungsvorrichtung sein, mit der Betriebszeiten und -strategien gesteuert werden können. Die Steuerungsvorrichtung 4 ist in einer dem Fachmann geeignet erscheinenden Weise mit dem Elektromotor zu koppeln. Alternativ kann der Elektromotor der Luftstromerzeugungsvorrichtung 3 auch durch einen einfachen Schalter betätigt werden. Der Servicevorgang zum Austausch der Filterelemente 2 ist in **Fig. 3** bis **Fig. 6** detailliert dargestellt.

Die Filtervorrichtung 2 verfügt über einen Filterelementträger 24, der eine Mehrzahl an Filterelementen 21 in V-Konfiguration trägt. Die Filterelemente 21 sind jeweils austauschbar in Filterelementeinschüben 241 des Filterelementträgers 24 aufgenommen.

Der Filterelementträger 24 ist über ein Gelenk 23 mit einem Drehfreiheitsgrad um die Hochachse schwenkbar bezüglich des Gebläsegehäuses 1 gelagert. In seinem Betriebszustand ist der Filterelementträger 24 vollständig innerhalb des Gebläsegehäuses 1 angeordnet und wird von der Arretierungsvorrichtung 22 in dieser Position gehalten, sodass sich dieser nicht unbeabsichtigt verlagert, was zu Undichtigkeiten und/oder unerwünschten Vibrationen führen kann. Die Arretierungsvorrichtung 22 weist einen federbelasteten Bolzen auf, welcher im Sperrzustand in eine korrespondierende Vertiefung/Bohrung des Gebläsegehäuses 1 eingreift. Zum Lösen wird der federbelastete Bolzen axial zurück verlagert und dadurch eine Schwenkbewegung des Filterelementträgers 24 um die Achse S frei gegeben.

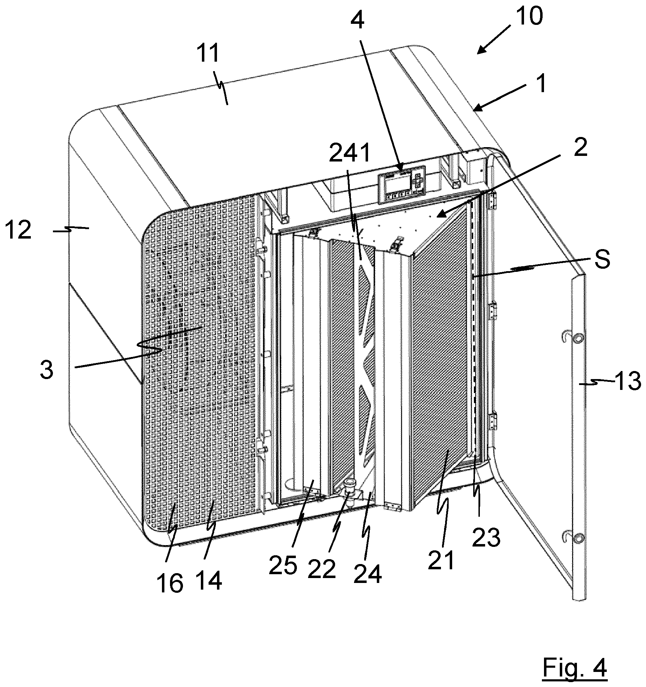

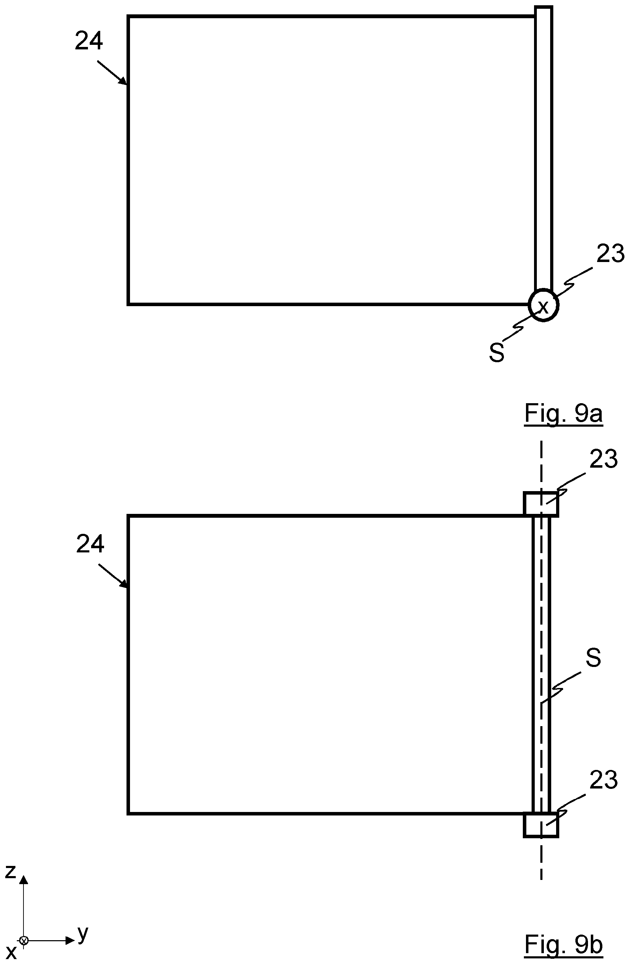

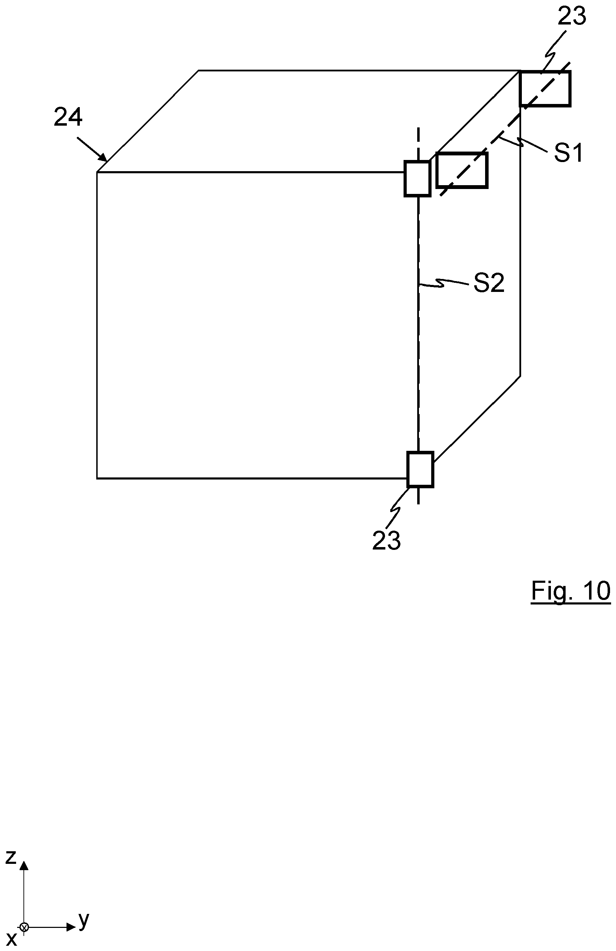

Durch Verschwenken des Filterelementträgers 24 um die Achse S kann der Filterelementträgers 24 in seinen Servicezustand überführt werden, in dem dieser zumindest teilweise aus der Servicetür 13 des Gebläsegehäuses 1 heraus ragt (siehe Fig. 4) In dieser Position des Filterelementträgers 24 ist die Zugänglichkeit der Filterelemente 21 deutlich verbessert, was den Servicevorgang (Austausch der Filterelemente) komfortabler gestaltet. In den in Fig. 3 bis Fig. 6 gezeigten Ausführungsformen erstreckt sich die Achse S entlang der Hochachse. Es sind in anderen Ausführungsformen jedoch auch hiervon abweichende Drehachsen sowie eine lineare Verlagerung des Filterelementträgers 24 von der Erfindung umfasst (vgl. Fig. 9 und 10).

In nicht figurativ gezeigten Ausführungen kann der Filterelementträgers 24 auch in seinem Servicezustand gegenüber dem Gebläsegehäuse arretiert werden. Hierfür kann eine zweite Arretierungsvorrichtung eingesetzt werden, die optional analog zur ersten Arretierungsvorrichtung aufgebaut sein kann.

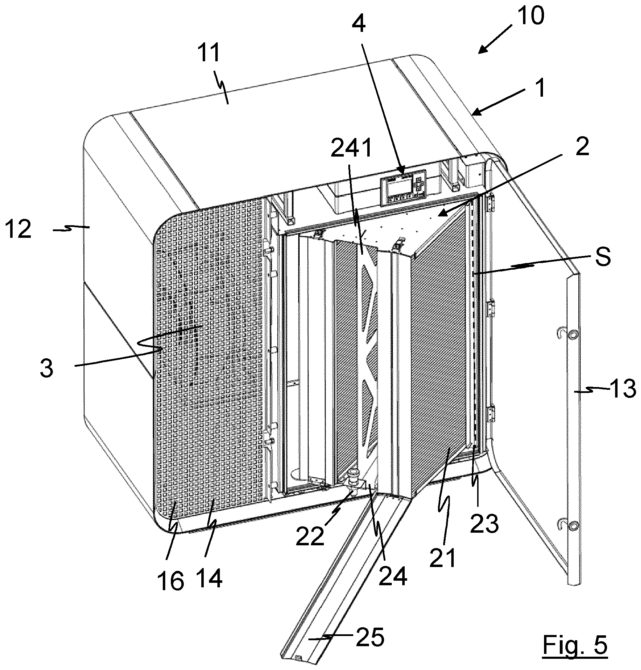

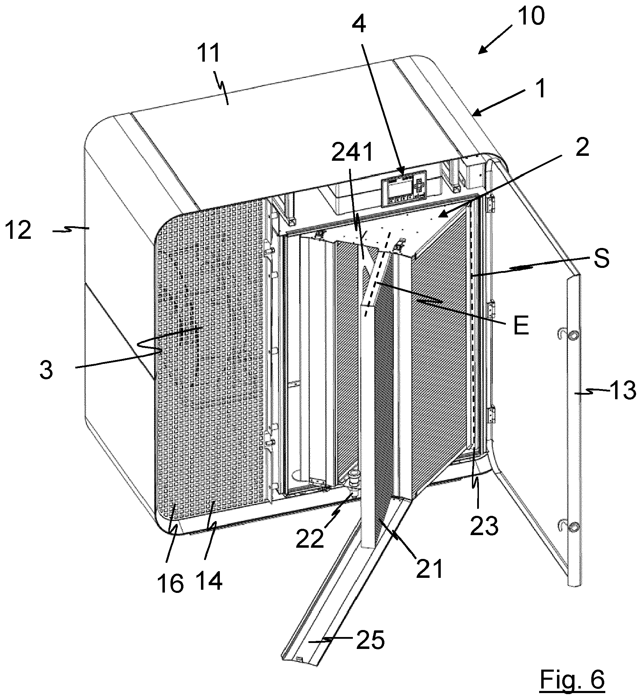

In Fig. 5 ist der nächste Schritt beim Filterelementservice gezeigt: Ausgehend vom Filterelementträger 24 im Servicezustand (aus Servicetür 13 heraus geschwenkt) wird an den auszutauschenden Filterelementen 21 die Filterelementhaltevorrichtung 25 gelöst und (nach unten) weggeklappt. Die Filterelementhaltevorrichtung 25 ist einenends (unten) schwenkbar am Filterelementträgerkörper befestigt und anderenends (oben) lösbar an dem Filterelementträgerkörper 24 befestigt. Im eingeklappten Zustand (Betriebszustand) hält die Filterelementhaltevorrichtung 25 ein oder mehrere Filterelement(e) 21 in ihren Filterelementeinschüben 241. Im ausgeklappten Servicezustand der Filterelementhaltevorrichtung 25 können die Filterelement(e) 21 entlang einer Einschub-/Entnahmerichtung E aus dem jeweiligen Filterelementeinschub 241 entnommen werden, was in Fig. 6 gezeigt ist.

Es kann in Ausführungen vorgesehen sein, dass die Filterelementhaltevorrichtung 25 in ihrem Servicezustand in einer horizontalen Lage arretierbar ist, sodass die Filterelementhaltevorrichtung 25 als Auszugshilfe für das Filterelement 21 dient und dieses gegenüber der Schwerkraft abstützt.

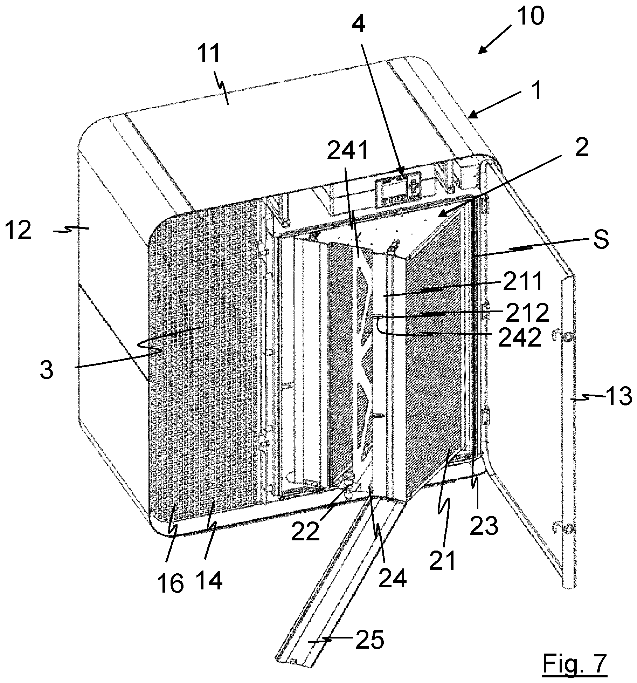

In **Fig. 7** ist eine Umgebungsluftreinigungsvorrichtung 10 gemäß einer weiteren Ausführungsform gezeigt, wobei sich der Filterelementträger 24 in seinem Servicezustand befindet. Von der in Fig. 3 bis 6 gezeigten Ausführungsform unterscheidet sich diese Ausführungsform dadurch, dass zumindest ein Filterelement 21 einen Rahmen 211 aufweist, der einen Faltenbalg aus gefaltetem Filtermedium umläuft, wobei in dem Rahmen zumindest ein (hier zwei) Einschnitte 212 von einem Rand vorgesehen sind. Die Einschnitte 212 liegen jeweils zwischen zwei benachbarten Falten des Faltenbalgs vor. In den Einschnitten 212 ist jeweils eine Rippe 242 aufgenommen, die am Filterelementträger 24 vorliegt. Die Rippe 242 erstreckt sich hierbei zwischen den zwei benachbarten Falten des Faltenbalgs aus Filtermedium. Die Rippe 242 kann als längliches flaches Bauteil an dem Filterelementträger 24 vorliegen und beispielsweise aus Metall, etwa Stahl bestehen. Die Rippe 242 kann in diesem Fall an dem Filterelementträgerkörper 24 lösbar oder unlösbar befestigt sein, etwa angeschweißt sein. Die funktionelle Interaktion der Rippe 242 am Filterelementträger 24 und des Einschnitts 212 am Filterelement 21 erlaubt eine zusätzliche Vereinfachung der Montage, da die Rippe 242 durch ihren Eingriff in den Einschnitt 212 eine stützende und positionierende Funktion erfüllt. Ferner kann hierdurch ein fehlerhafte Montage des Filterelements 21 vermieden werden (Poka-Yoke) sowie der Verbau von ungeeigneten Filterelementen (z. B. falsche Spezifikation) unterbunden werden. Es können auch sich gegenüberliegende Einschnitte 212 an jeweils gegenüberliegenden Rahmenseiten, insbesondere in den Seitenbändern des Rahmens, vorgesehen sein. In diesem Fall kann das Filterelement 21 während seines kompletten Montagewegs entlang der Einschub-/Entnahmerichtung E (siehe Fig. 6) durch den Eingriff der Rippe 242 in den Einschnitt 212 geführt werden.

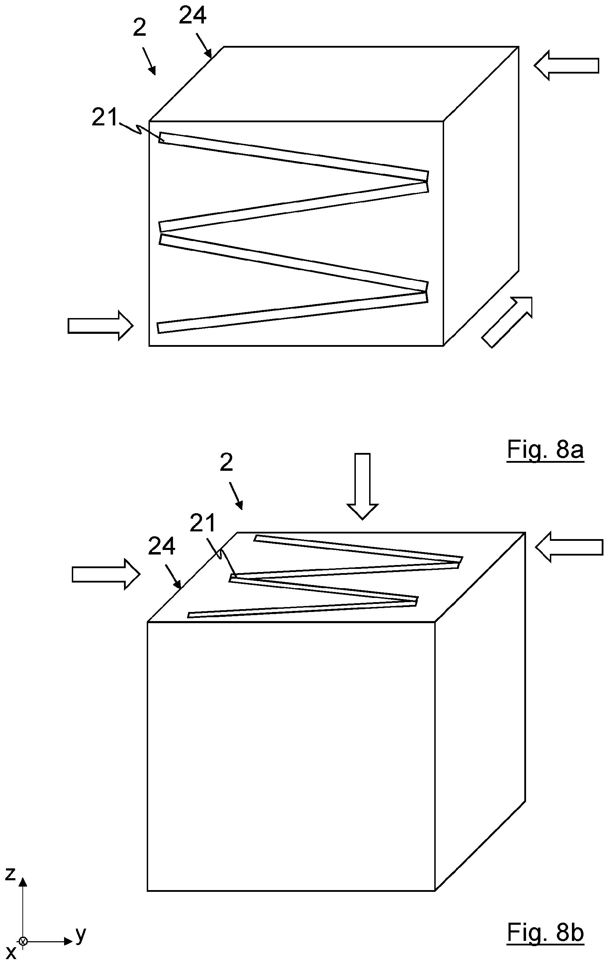

In **Fig. 8a, 8b** sind schematisch weitere mögliche Ausrichtungen der Einschub-/Entnahmerichtung des Filterelements gezeigt. Der "Würfel" stellt den Filterelementträger 24 dar, in dem V-förmig eine Mehrzahl Filterelemente 21 angeordnet ist. Die Einschub-/ Entnahmerichtung der Filterelemente kann nun entlang der mit Pfeilen gekennzeichneten Richtungen verlaufen. Im verwendeten Koordinatensystem handelt es sich bei der z-Richtung um die Hochachse bei bestimmungsgemäßer Montage des Filterelementträgers 24. Bestimmte Einschub-/Entnahmerichtungen eignen sich hierbei besonders gut für eine Kombination mit einem Gebläsegehäuse, das seine Servicetür an einer der Seitenwände oder an einer oberen und/oder unteren Wand oder an einer Vorder- bzw. Rückwand aufweist. Je nach Einsatzrandbedingungen ist eine vorteilhafte Kombination der Anordnung der Servicetür am Gebläsegehäuse und einer bestimmten Einschub-/ Entnahmerichtung der Filterelemente zu wählen. Maßgeblich für eine Auswahl ist hierbei nicht zuletzt der Aufstellort (Zugänglichkeit der Servicetür, Montagehöhe der Umgebungsluftreinigungsvorrichtung etc.).

In **Fig. 9a, 9b** sind zwei weitere Alternativen zur Ausrichtung der Schwenkachse S des Gelenks 23, mit dem der Filterelementträger am Gebläsegehäuse gelagert ist, dargestellt. Die z-Richtung ist hierbei wiederum die Hochachse bei bestimmungsgemäßer Montage des Filterelementträgers 24.

In **Fig. 10** ist als Weiterbildung eine Verschwenkbarkeit des Filterelementträgers 24 um zwei Achsen S1, S2 gezeigt, wobei die z-Richtung hierbei wiederum die Hochachse bei bestimmungsgemäßer Montage des Filterelementträgers 24 ist. Hierbei kann beispielsweise zunächst ein linearer Auszug entlang der Achse S1 erfolgen, dann eine Verschwenkung um Achse S2 und schließlich eine Verschwenkung um Achse S2 um den Filterelementträger 24 in seinen Servicezustand zu überführen. Es können in anderen nicht figurativ gezeigten Ausführungen der Erfindung auch andere Kombinationen von Dreh- und Linearbewegungsachsen zum Einsatz kommen.

### Bezugszeichenliste

- 10: Umgebungsluftreinigungsvorrichtung
- 1: Gebläsegehäuse
- 11: Obere/untere Wand des Gebläsegehäuses
- 12: Seitenwände des Gebläsegehäuses
- 13: Servicetür
- 14: Luftauslass
- 15: Lufteinlass
- 16: Gitter
- 2: Filtervorrichtung
- 21: Filterelement
- 211: Rahmen
- 212: Einschnitt
- 22: Arretierungsvorrichtung
- 23: Scharnier
- 24: Filterelementträger
- 241: Filterelementeinschub
- 242: Rippe
- 25: Filterelementhaltevorrichtung
- 3: Luftstromerzeugungsvorrichtung
- 4: Steuerungsvorrichtung
- E: Einschub-/Entnahmerichtung des Filterelements
- S: Schwenkachse des Filterelementträgers

## Patentansprüche

1. Umgebungsluftreinigungsvorrichtung (10), insbesondere zur stationären Umgebungsluftfiltration im Innen- und/oder Außenraum, mit einem Gebläsegehäuse (1), das zumindest einen Lufteinlass (15) und zumindest einen Luftauslass (14) aufweist, wobei in dem Gebläsegehäuse (1) zumindest eine Luftstromerzeugungsvorrichtung (3) angeordnet ist, mittels der ein Luftstrom von dem Lufteinlass (15) zu dem Luftauslass (14) erzeugbar ist, wobei in dem Gebläsegehäuse (1) ferner strömungsmäßig zwischen dem Lufteinlass (15) und dem Luftauslass (14) eine Filtervorrichtung (2) vorliegt, welche eine Mehrzahl an V-förmig zueinander angeordneten Filterelementen (21) umfasst,
**dadurch gekennzeichnet, dass** das Gebläsegehäuse (1) zumindest eine Servicetür (13) umfasst, durch welche ein Innenraum des Gebläsegehäuses (1) zugänglich ist, und dass die Filtervorrichtung (2) einen an dem Gebläsegehäuse (1) gehaltenen Filterelementträger (24) umfasst, der die V-förmig zueinander angeordneten Filterelemente (21) trägt, wobei der Filterelementträger (24) von einem Betriebszustand, in welchem dieser vollständig innerhalb des Gebläsegehäuses (1) vorliegt, in einen Servicezustand überführbar ist, in welchem der Filterelementträger (24) zumindest teilweise durch die Servicetür (13) aus dem Gebläsegehäuse (1) herausragt, wobei der Filterelementträger (24) gegenüber dem Gebläsegehäuse (1) um zumindest eine Achse (S) verschwenkbar gelagert ist und die Überführung des Filterelementträgers (24) von dem Betriebszustand in den Servicezustand und umgekehrt ein Verschwenken um die Achse (S) umfasst.

2. Umgebungsluftreinigungsvorrichtung (10) nach Anspruch 1, **dadurch gekennzeichnet, dass** eine Schwenkachse (S) des Filterelementträgers (24) gegenüber dem Gebläsegehäuse (1) in einer vorbestimmten Betriebsorientierung der Umgebungsluftreinigungsvorrichtung (10) in vertikaler und/oder horizontaler Richtung verläuft.

3. Umgebungsluftreinigungsvorrichtung (10) nach Anspruch 1 oder 2, **dadurch gekennzeichnet, dass der** Filterelementträger (24) vermittels zumindest eines Gelenks (23) mit zumindest einem Drehfreiheitsgrad mit dem Gebläsegehäuse (1) gekoppelt ist.

4. Umgebungsluftreinigungsvorrichtung (10) nach einem der Ansprüche 1 bis 3, **dadurch gekennzeichnet, dass** die Umgebungsluftreinigungsvorrichtung (10) eine Arretierungsvorrichtung (22) aufweist, vermittels der der Filterelementträger (24) in seinem Betriebszustand und/oder seinem Servicezustand gegenüber dem Gebläsegehäuse (1) arretierbar ist.

5. Umgebungsluftreinigungsvorrichtung (10) nach Anspruch 4, **dadurch gekennzeichnet, dass** ein erster Teil der Arretierungsvorrichtung (22) an dem Filterelementträger (24) vorliegt und ein zweiter Teil der Arretierungsvorrichtung (22) an dem Gebläsegehäuse (1).

6. Umgebungsluftreinigungsvorrichtung (10) nach Anspruch 4 oder 5, **dadurch gekennzeichnet, dass** die Arretierungsvorrichtung (22) zumindest ein federbelastetes Sperrelement umfasst.

7. Umgebungsluftreinigungsvorrichtung (10) nach einem der vorigen Ansprüche, **dadurch gekennzeichnet, dass** eine Längserstreckung der Mehrzahl an V-förmig zueinander angeordneten Filterelementen (21) in der vorbestimmten Betriebsorientierung der Umgebungsluftreinigungsvorrichtung (10) in vertikaler Richtung verläuft.

8. Umgebungsluftreinigungsvorrichtung (10) nach einem der vorigen Ansprüche, **dadurch gekennzeichnet, dass** der Filterelementträger (24) eine Mehrzahl Filterelementeinschübe (241) umfasst, in denen jeweils ein Filterelement (21) entlang einer Einschub-/Entnahmerichtung (E) entnehmbar aufgenommen ist.

9. Umgebungsluftreinigungsvorrichtung (10) nach einem der vorigen Ansprüche, **dadurch gekennzeichnet, dass** der Filterelementträger (24) zumindest eine Filterelementhaltevorrichtung (25) aufweist, welche zumindest eines der Filterelemente (21) in eingeschobenem Zustand bezüglich des Filterelementträgers (24) mechanisch fixiert, wobei bevorzugt die Filterelementhaltevorrichtung (25) in einen Servicezustand überführbar ist, in welchem diese gegenüber einem Filterelementträgerkörper (24) verlagert vorliegt und als Auszugshilfe für das Filterelement (21) dient.

10. Umgebungsluftreinigungsvorrichtung (10) nach einem der vorigen Ansprüche, **dadurch gekennzeichnet, dass** zumindest eines der Filterelemente (21) einen Faltenbalg aus einem gefalteten Filtermedium umfasst.

11. Umgebungsluftreinigungsvorrichtung (10) nach Anspruch 10, **dadurch gekennzeichnet, dass** eine Faltenlängserstreckung des Faltenbalgs parallel zu der Einschub-/Entnahmerichtung (E) verläuft.

12. Umgebungsluftreinigungsvorrichtung (10) nach Anspruch 10 oder 11, **dadurch gekennzeichnet, dass** zumindest eines der Filterelemente (21) einen Rahmen (211) aufweist, der den Faltenbalg umlaufend umgibt, wobei der Rahmen (211) von einem oberen oder unteren Rand her einen Einschnitt (212) aufweist, welcher zwischen zwei benachbarten Falten vorliegt.

13. Umgebungsluftreinigungsvorrichtung (10) nach Anspruch 12, **dadurch gekennzeichnet, dass** der Filterelementträger (24) im Bereich zumindest eines Filterelementeinschubs (241) zumindest eine sich in der Einschub-/Entnahmerichtung (E) erstreckende Rippe (242) aufweist, welche in den Einschnitt (212) des Filterelements (21) eingreift und zwischen zwei benachbarten Falten des Faltenbalgs des Filterelements (21) aufgenommen ist.

14. Umgebungsluftreinigungsvorrichtung (10) nach Anspruch 13, **dadurch gekennzeichnet, dass** die Rippe (242) eine Länge aufweist, welche mindestens 1/10, bevorzugt mindestens 1/6, besonders bevorzugt mindestens 1/3, der Erstreckung des Filterelements (21) entlang seiner Faltenlängsrichtung entspricht.

15. Umgebungsluftreinigungsvorrichtung (10) nach einem der vorigen Ansprüche, **dadurch gekennzeichnet, dass** das Gebläsegehäuse (1) jeweils einander gegenüberliegende vorder- und rückseitige Wände, Seitenwände sowie obere und untere Wände umfasst, wobei bevorzugt der Luftauslass (14) in einer vorder- oder rückseitigen Wand und der Lufteinlass (15) in einer Seitenwand vorliegt, wobei besonders bevorzugt ein Luftstrom zwischen dem Lufteinlass (15) und dem Luftauslass (14) zumindest eine Richtungsänderung in seiner Hauptströmungsrichtung erfährt.

16. Verwendung eines Filterelements (21) umfassend einen Faltenbalg aus gefaltetem Filtermedium und einen Rahmen (211), der den Faltenbalg umlaufend umgibt, wobei der Rahmen (211) von einem oberen und/oder einem unteren Rand her zumindest einen Einschnitt (212) aufweist, welcher zwischen zwei benachbarten Falten vorliegt, in einer Umgebungsluftreinigungsvorrichtung nach einem der Ansprüche 1 bis 15.

17. Verwendung nach Anspruch 16, wobei eine Faltenlängserstreckung des Faltenbalgs parallel zu einer Einschub-/Entnahmerichtung (E) verläuft.

## Claims

1. Ambient air purification device (10), in particular for stationary ambient air purification in the internal and/or external space, having a blower housing (1) featuring at least one air inlet (15) and at least one air outlet (14), wherein at least one air flow generating means (3), which can generate an air flow from the air inlet (15) to the air outlet (14), is disposed in the blower housing (1), wherein a filter apparatus (2), which comprises a plurality of filter elements (21) disposed in a V-shaped manner with respect to each other, is furthermore fluidically provided in the blower housing (1) between the air inlet (15) and the air outlet (14),
**characterized in that** the blower housing (1) comprises at least one service door (13) through which an interior space of the blower housing (1) is accessible, and **in that** the filter apparatus (2) comprises a filter element carrier (24) attached to the blower housing (1) and supports the filter elements (21) disposed in a V-shaped manner with respect to each other, wherein the filter element carrier (24) can be transferred from an operating state, in which it is completely provided in the blower housing (1), to a service state, in which the filter element carrier (24) projects at least partially through the service door (13) out of the blower housing (1), wherein the filter element carrier (24) is pivotably mounted around at least one axis (S) with respect to the blower housing (1) and the transfer of the filter element carrier (24) from the operating state to the service state and vice versa comprises a pivoting around the axis (S).

2. Ambient air purification device (10) according to claim 1, **characterized in that** a swivel axis (S) of the filter element carrier (24) extends with respect to the blower housing (1) in a predetermined operating orientation of the ambient air purification device (10) in a vertical and/or horizontal direction.

3. Ambient air purification device (10) according to claim 1 or 2, **characterized in that** the filter element carrier (24) is coupled with the blower housing (1) by means of at least one joint (23) having at least one degree of rotational freedom.

4. Ambient air purification device (10) according to one of the claims 1 to 3, **characterized in that** the ambient air purification device (10) features a locking device (22) by means of which the filter element carrier (24) can be locked in its operating state and/or in its service state with respect to the blower housing (1).

5. Ambient air purification device (10) according to claim 4, **characterized in that** a first part of the locking device (22) is provided on the filter element carrier (24) and a second part of the locking device (22) is provided on the blower housing (1).

6. Ambient air purification device (10) according to claim 4 or 5, **characterized in that** the locking device (22) comprises at least one spring-loaded locking element.

7. Ambient air purification device (10) according to one of the preceding claims, **characterized in that** a longitudinal extension of the plurality of filter elements (21) disposed in a V-shaped manner with respect to each other extends in the predetermined operating orientation of the ambient air purification device (10) in a vertical direction.

8. Ambient air purification device (10) according to one of the preceding claims, **characterized in that** the filter element carrier (24) comprises a plurality of filter element inserts (241), in each of which a filter element (21) is removably accommodated along an insertion/withdrawal direction (E).

9. Ambient air purification device (10) according to one of the preceding claims, **characterized in that** the filter element carrier (24) features at least one filter element holding apparatus (25) which mechanically secures at least one of the filter elements (21) in the inserted state with respect to the filter element carrier (24), wherein preferably the filter element holding apparatus (25) is transferable into a service state in which it is displaceably provided with respect to a filter element carrier body (24) and serves as extraction aid for the filter element (21).

10. Ambient air purification device (10) according to one of the preceding claims, **characterized in that** at least one of the filter elements (21) comprises a filter bellows made of a folded filter media.

11. Ambient air purification device (10) according to claim 10, **characterized in that** a longitudinal fold extension of the filter bellows extends parallel to the insertion/withdrawal direction (E).

12. Ambient air purification device (10) according to claim 10 or 11, **characterized in that** at least one of the filter elements (21) features a frame (211) which surrounds the filter bellows circumferentially, wherein the frame (211) features from a top or bottom edge a notch (212) which is provided between two adjacent folds.

13. Ambient air purification device (10) according to claim 12, **characterized in that** the filter element carrier (24) features, in the area of at least one filter element insert (241), at least one rib (242) extending in the insertion/withdrawal direction (E) and which engages in the notch (212) of the filter element (21) and is accommodated between two adjacent folds of the filter bellows of the filter element (21).

14. Ambient air purification device (10) according to claim 13, **characterized in that** the rib (242) features a length which corresponds to at least 1/10, preferably to at least 1/6, particularly preferably to at least 1/3 of the extension of the filter element (21) along its longitudinal fold direction.

15. Ambient air purification device (10) according to one of the preceding claims, **characterized in that** the blower housing (1) comprises opposing front and rear walls, side walls as well as top and bottom walls, respectively, wherein preferably the air outlet (14) is provided in a front or rear wall and the air inlet (15) is provided in a side wall, wherein particularly preferably an airflow between the air inlet (15) and the air outlet (14) undergoes at least one directional change in its main flow direction.

16. Use of a filter element (21) comprising a filter bellows made of folded filter media and a frame (211) which surrounds the filter bellows circumferentially, wherein the frame (211) features from a top and/or bottom edge at least one notch (212) which is provided between two adjacent folds, in an ambient air purification device according to one of the claims 1 to 15.

17. Use according to claim 16, wherein a longitudinal fold extension of the filter bellows extends parallel to an insertion/withdrawal direction (E).

## Revendications

1. Dispositif de purification de l'air ambiant (10), notamment pour la filtration stationnaire de l'air ambiant dans l'espace intérieur et/ou extérieur, ayant un boîtier de la soufflante (1) qui présente au moins une entrée d'air (15) et au moins une sortie d'air (14), au moins un dispositif générateur de flux d'air (3), au moyen duquel un flux d'air peut être généré de l'entrée d'air (15) vers la sortie d'air (14), étant disposé dans le boîtier de la soufflante (1), un dispositif de filtration (2), qui comprend une pluralité d'éléments filtrants (21) disposés en forme de V les uns par rapport aux autres, se trouvant en outre fluidiquement dans le boîtier de la soufflante (1) entre l'entrée d'air (15) et la sortie d'air (14), **caractérisé en ce que** le boîtier de la soufflante (1) comprend au moins une porte de service (13) par laquelle un espace intérieur du boîtier de la soufflante (1) est accessible, et **en ce que** le dispositif de filtration (2) comprend un support d'élément filtrant (24) fixé sur le boîtier de la soufflante (1), ledit support supportant les éléments filtrants (21) disposés en forme de V les uns par rapport aux autres, le support d'élément filtrant (24) pouvant être transféré d'un état opérationnel, dans lequel il se trouve entièrement à l'intérieur du boîtier de la soufflante (1), à un état de service, dans lequel le support d'élément filtrant (24) fait saillie au moins partiellement à travers la porte de service (13) hors du boîtier de la soufflante (1), le support d'élément filtrant (24) étant monté de manière à pouvoir pivoter autour d'au moins un axe (S) par rapport au boîtier de la soufflante (1) et le transfert du support d'élément filtrant (24) de l'état de fonctionnement à l'état de service et inversement comprenant un pivotement autour de l'axe (S).

2. Dispositif de purification de l'air ambiant (10) selon la revendication 1, **caractérisé en ce qu'**un axe de pivotement (S) du support d'élément filtrant (24) s'étend par rapport au boîtier de la soufflante (1) dans une orientation de fonctionnement prédéterminée du dispositif de purification de l'air ambiant (10) en direction verticale et/ou horizontale.

3. Dispositif de purification de l'air ambiant(10) selon la revendication 1 ou 2, **caractérisé en ce que** le support d'élément filtrant (24) est accouplé au boîtier de la soufflante (1) au moyen d'au moins une articulation (23) ayant au moins un degré de liberté de rotation.

4. Dispositif de purification de l'air ambiant (10) selon l'une quelconque des revendications 1 à 3, **caractérisé en ce que** le dispositif de purification de l'air ambiant (10) présente un dispositif de blocage (22) au moyen duquel le support d'élément filtrant (24) peut être bloqué dans son état opérationnel et/ou dans son état de service par rapport au boîtier de la soufflante (1).

5. Dispositif de purification de l'air ambiant (10) selon la revendication 4, **caractérisé en ce qu'**une première partie du dispositif de blocage (22) se trouve sur le support d'élément filtrant (24) et la seconde partie du dispositif de blocage (22) sur le boîtier de la soufflante (1).

6. Dispositif de purification de l'air ambiant (10) selon la revendication 4 ou 5, **caractérisé en ce que** le dispositif de blocage (22) comprend au moins un élément de blocage à ressort.

7. Dispositif de purification de l'air ambiant (10) selon l'une quelconque des revendications précédentes, **caractérisé en ce qu'**une extension longitudinale de la pluralité d'éléments filtrants (21) disposés en forme de V les uns par rapport aux autres s'étend en direction verticale dans l'orientation de fonctionnement prédéterminée du dispositif de purification de l'air ambiant (10).

8. Dispositif de purification de l'air ambiant (10) selon l'une quelconque des revendications précédentes, **caractérisé en ce que** le support d'élément filtrant (24) comprend une pluralité de glissières pour éléments filtrants (241) dans lesquelles est respectivement logé un élément filtrant (21) de manière amovible le long d'un sens d'insertion/de prélèvement (E).

9. Dispositif de purification de l'air ambiant (10) selon l'une quelconque des revendications précédentes, **caractérisé en ce que** le support d'élément filtrant (24) présente au moins un dispositif de maintien pour élément filtrant (25) qui fixe mécaniquement au moins l'un des éléments filtrants (21) à l'état inséré par rapport au support d'élément filtrant (24), de préférence le dispositif de maintien pour élément filtrant (25) pouvant être transféré à un état de service dans lequel celui-ci se trouve décalé par rapport à un corps de support d'élément filtrant (24) et sert d'aide à l'extraction pour l'élément filtrant (21).

10. Dispositif de purification de l'air ambiant (10) selon l'une quelconque des revendications précédentes, **caractérisé en ce qu'**au moins l'un des éléments filtrants (21) comprend un soufflet de filtre réalisé à partir d'un milieu filtrant plié.

11. Dispositif de purification de l'air ambiant (10) selon la revendication 10, **caractérisé en ce qu'**une extension longitudinale des plis du soufflet de filtre s'étend parallèlement par rapport au sens d'insertion/de prélèvement (E).

12. Dispositif de purification de l'air ambiant (10) selon la revendication 10 ou 11, **caractérisé en ce qu'**au moins l'un des éléments filtrants (21) présente un cadre (211) qui entoure le soufflet de filtre en sens circonférentiel, le cadre (211) présentant à partir d'un bord supérieur ou inférieur une encoche (212) qui se trouve entre deux plis voisins.

13. Dispositif de purification de l'air ambiant (10) selon la revendication 12, **caractérisé en ce que** le support d'élément filtrant (24) présente, dans la zone d'au moins une glissière pour éléments filtrants (241), au moins une nervure (242) s'étendant en sens d'insertion/de prélèvement (E) et qui s'engage dans l'encoche (212) de l'élément filtrant (21) et est logée entre deux plis voisins du soufflet de filtre de l'élément filtrant (21).

14. Dispositif de purification d'air ambiant (10) selon la revendication 13, **caractérisé en ce que** la nervure (242) présente une longueur qui correspond à au moins 1/10, de préférence à au moins 1/6, de façon particulièrement préférée à au moins 1/3, de l'extension de l'élément filtrant (21) le long de sa direction longitudinale de pliage.

15. Dispositif de purification de l'air ambiant (10) selon l'une quelconque des revendications précédentes, **caractérisé en ce que** le boîtier de la soufflante (1) comprend des parois avant et arrière, des parois latérales et des parois supérieures et inférieures respectivement opposées, de façon préférée la sortie d'air (14) se trouvant dans une paroi avant ou arrière et l'entrée d'air (15) se trouvant dans une paroi latérale, de façon particulièrement préférée un flux d'air entre l'entrée d'air (15) et la sortie d'air (14) subissant au moins un changement de direction dans sa direction de flux principale.

16. Utilisation d'un élément filtrant (21) comprenant un soufflet de filtre constitué d'un milieu filtrant plié et un cadre (211) qui entoure le soufflet de filtre en sens circonférentiel, le cadre (211) présentant, à partir d'un bord supérieur et/ou inférieur, au moins une encoche (212) qui se trouve entre deux plis voisins, dans un dispositif de purification de l'air ambiant selon l'une quelconque des revendications 1 à 15.

17. Utilisation selon la revendication 16, une extension longitudinale des plis du soufflet de filtre s'étendant parallèlement par rapport au sens d'insertion/de prélèvement (E).
